# EUROPEAN PATENT SPECIFICATION

(11) **EP 1 765 029 B1**
(45) Date of publication and mention of the grant of the patent: **06.08.2008**
(21) Application number: 05108511.6
(22) Date of filing: 15.09.2005
(51) Int. Cl.: H04Q 7/38

(54) **System and method of data access for mobile stations**
System und Daten-Zugriffsverfahren für Mobilstationen
Système et procédé d'accès aux données pour stations mobiles

(43) Date of publication of application: 21.03.2007
(73) Proprietor: Research In Motion Limited, Waterloo, Ontario N2L 3W8 (CA)
(72) Inventor: Hossain, Asif, Kanata Ontario K2K 3H9 (CA); Ma, David, Ottawa Ontario K1R 7S7 (CA)
(74) Representative: Rickard, David John

(56) References cited:
- US-A- 6 119 003
- US-A1- 2004 087 305
- US-A1- 2005 037 755
- US-A1- 2005 043 026

## Description

A portion of the disclosure of this patent document contains material that is subject to copyright protection. The copyright owner has no objection to the facsimile reproduction by anyone of the patent document or the patent disclosure, as it appears in the Patent and Trademark Office patent files or records, but otherwise reserves all copyrights whatsoever.

This patent document relates generally to mobile stations, and in particular to a system and method of data access for mobile stations.

In a mixed coverage area of 1XRTT and 1XEV-DO, it is very possible for carriers to deploy separate PDSN/AAA to manage each wireless network separately. Because of the separate management, it is possible for carriers to control data access (i.e. establish a PPP session) to each network with separate mobile authentication rules.

An EVDO capable device, when queried about Protocol Capability for Over The Air Provisioning, it will inform the network that it is capable of IS-683C version of PRL. Network therefore can download an IS-683C version of PRL but it is possible that user may not purchase EVDO service. Under such circumstances, device SW is unaware of such service unavailability and therefore will always try to perform any data access through the EVDO network. The EVDO standard already has the provision for AN level authentication, which is an optional feature that a carrier may or may not be implemented.

For scenarios where AN Authentication is disabled but PDSN/AAA authentication is separate between EVDO & 1X network, there needs to be a mechanism for a device with EVDO PRL but not configured by network for EVDO service to fall back to 1X system for data service; this behaviour is currently undefined.

Also, if the user later on purchases EVDO service, there needs to be a seamless mechanism for the device to resume from 1X fall back condition to start using the EVDO service without the need to reconfigure anything on the device --- this behaviour is also not defined any where.

[0006A] US6119003 describes a system for switching from a second less preferred wireless network to a first more preferred wireless network for data access in response to changes in the received signal strength of the first wireless network, or other network characteristics such as network congestion.

Hence there is a need for an improved data access method and apparatus for mobile terminal.

The patent disclosure describes a solution to one or more of the problems described above.

In accordance with an embodiment of the patent disclosure, there is preferably provided a method of data access for a mobile terminal capable of establishing data access via a first and a second wireless network within the same coverage area, the method comprising the steps of: establishing access via the second wireless network within the coverage area; monitoring for network identifier changes in the first and/or second wireless networks; determining the availability of the first wireless network in response to determining that a network identifier change has occurred in the first network; attempting access via the first wireless network in response to determining that the first wireless network is available.

In accordance with an embodiment of the patent disclosure, there is preferably provided an apparatus for data access for a mobile terminal capable of establishing data access via a first and a second wireless network within the same coverage area, the apparatus comprising: means for establishing access via the second wireless network within the coverage area; means for monitoring for network identifier changes in the first and/or second wireless networks; means for determining availability of the first wireless network in response to determining that a network identifier change has occurred in the first network; and means for attempting access via the first wireless network in response to determining that the first wireless network is available.

A system and method of the patent disclosure will now be described with reference to various examples of how the embodiments can best be made and used. For convenience, like reference numerals are used throughout the description and several views of the drawings to indicate like or corresponding parts, wherein the various elements are not necessarily drawn to scale.

The present patent disclosure describes various use cases related to PPP authentication retry procedures for 1X/1XEV-DO hybrid mobiles.

### BRIEF DESCRIPTION OF THE DRAWINGS

An embodiment of the patent disclosure will now be described by way of example only with reference to the following drawings in which:

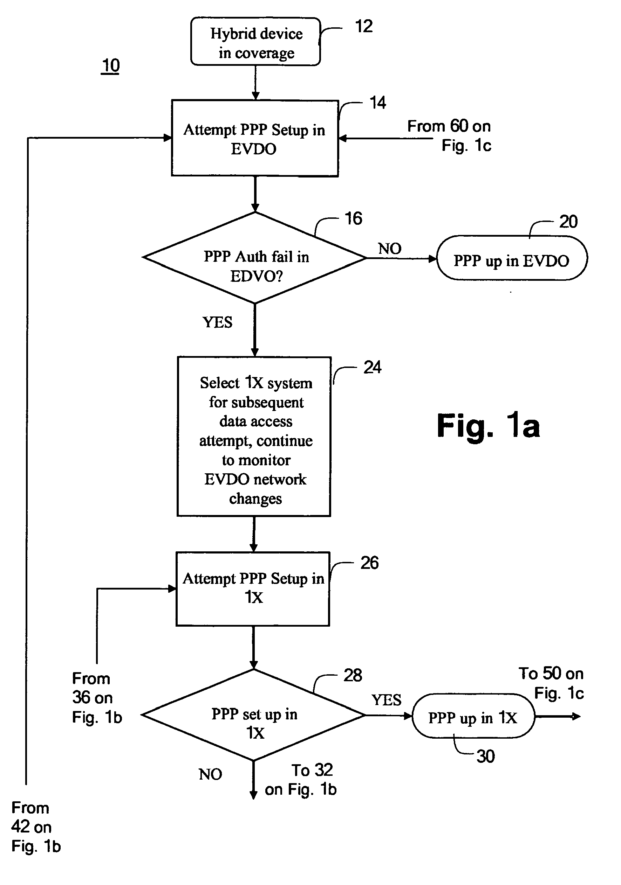

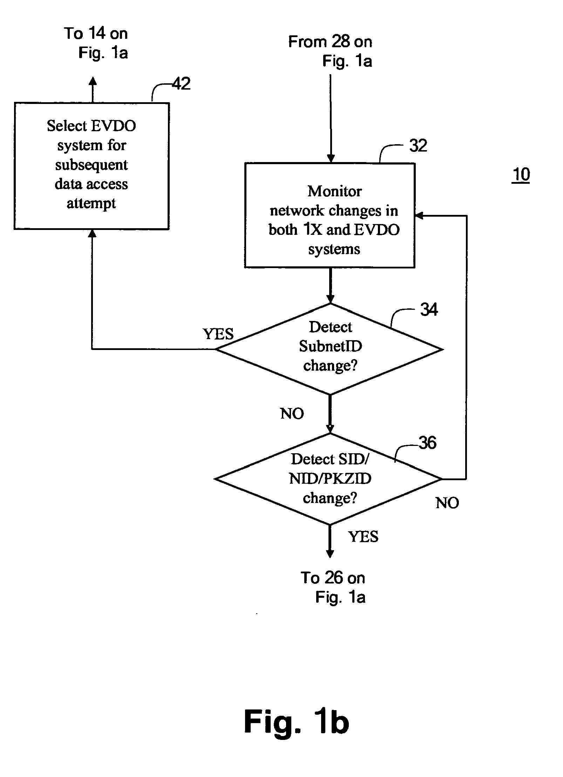

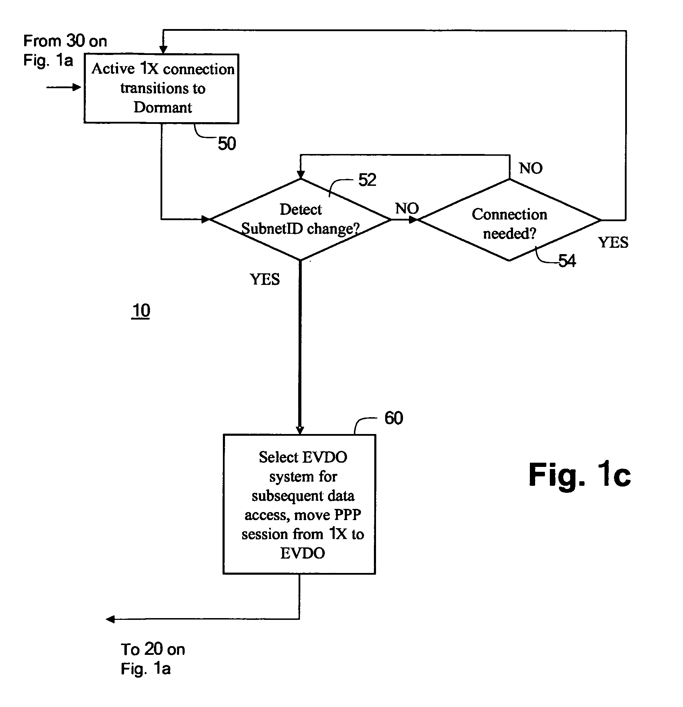

Figs. 1a, 1b and 1c there is illustrated in a flow chart a method of data access for a mobile terminal, in accordance with an embodiment of the patent disclosure.

### DESCRIPTION OF PREFERRED EMBODIMENTS

The present patent disclosure uses the following acronyms:
- 1XEV-DO: 1X Evolution, Data-Only
- PPP: Point-to-Point Protocol
- CHAP: Challenge-Handshake Authentication Protocol
- SID: System ID
- NID: Network ID
- PKZID: Packet Zone ID

Referring to Figs. 1a, 1b and 1c there is in a flow chart a method of data access for a mobile terminal, in accordance with an embodiment of the patent disclosure. The present method of data access 10 is illustrated in Fig. 1a. A hybrid device is in coverage for both 1X and 1XEV-DO systems as represented by state block 12. The hybrid device attempts a PPP session setup in EVDO as represented by process block 14. A decision block 16 determines if PPP authentication failed in EVDO. If NO as state "PPP up in EVDO" is entered at 20.

A YES to decision block 16 leads to a process block 24, which selects 1X system for subsequent data access attempts. Device will continue to monitor network changes in EVDO system.

Process block 24 leads to process block 26, which attempts to set up PPP session in 1X. A decision block 28 determines whether PPP set up in 1X occurred, if YES the hybrid device enters a "PPP up in 1X" state 30. If NO, the process passes on to block 32 of Fig. 1b.

Referring to Fig. 1b a process block 32 monitors network changes in both 1X and EVDO systems. Following step 32, a decision block 34 detects whether a SubnetID change has occurred. If NO, a decision block 36 detects whether a SID/NID/PKZID change has occurred. If YES, the process returns to the process block 26 of Fig. 1a.

A YES to decision block 34 leads to a process block 42 which selects EVDO system for subsequent data access attempts and passes the process back to the process block 14 of Fig. 1a. A NO to the decision block 36 returns to monitoring network changes at process block 32.

Referring to Fig. 1c a process block 50, coupled to the state block 30 of Fig. 1a, monitors when an active 1X connection transitions to a dormant state. Following step 50, a decision block 52 detects whether a SubnetID change has occurred. If NO, a decision block 54 determines if a connection is needed. If YES, the path returns to process block 50. If NO, the path returns to the decision block 52.

A YES to the decision block 52 leads to a process block 60, which selects EVDO system for subsequent data access, and moves the PPP session from 1X to EVDO. Process block 60 leads to a state block 20, which represents the device as having an active PPP session in EVDO.

The generalized method of Figs. 1a, 1b, and 1c can be used for a number of situations. By way of example several use cases are presented. For each case preconditions and post conditions are given as well as the steps taken by the process of Figs. 1a, 1b and 1c to transition the hybrid device.

Use Case 1: EVDO Auth Failure, Successful PPP Setup in 1X Preconditions:
- Hybrid device in 1XRTT/1XEV-DO coverage
- Session, connection established in EVDO
- LCP negotiation successful
- Attempt data access authentication using negotiated protocol (e.g. CHAP)

### Postconditions:

- PPP established in 1X

### Exposition:

1. Data access authentication fails in EVDO coverage, block 16.
2. Select 1X system for subsequent data access attempts, block 24.
3. Retry PPP setup in 1X, block 26.

Use Case 2: EVDO Auth Failure, 1X Auth Failure Preconditions:
- Hybrid device in 1XRTT/1XEV-DO coverage
- Session, connection established in EVDO
- LCP negotiation successful
- Attempt data access authentication using negotiated protocol (e.g. CHAP)

### Postconditions:

- No PPP session active

### Exposition:

1. Data access authentication fails in EVDO coverage, block 16.
2. Select 1X system for subsequent data access attempts, block 24.
3. Retry PPP setup in 1X, block 26.
4. Data access set up in 1X coverage, block 28 and up in block 30.

Use Case 3: Data Auth Failure, PPP Retry on SubnetID Change Preconditions:
- Hybrid device fails EVDO and 1X data authentication

### Postconditions:

- Attempt PPP retry in 1X

### Exposition:

1. Hybrid device detects change in SubnetID from received overhead messages, block 34.
2. Select EVDO system for subsequent data access attempts, block 42.
3. Retry PPP setup in EVDO, block 14.

Use Case 5: Data Auth Failure, PPP Retry on SID/NID/PKZID Change Preconditions:
- Hybrid device fails EVDO and 1X data authentication
- No change in SubnetID detected

### Postconditions:

- Attempt PPP retry in 1X

### Exposition:

1. Hybrid device detects change in SID/NID/PKZID from received overhead messages, block 36.
2. Retry PPP setup in 1X, block 26.

Use Case 6: 1X PPP Established, Idle 1X Connection, No Pending Data, Detect New SubnetID

### Preconditions:

- PPP session active in 1X
- 1X connection is dormant

### Postconditions:

- PPP established in EVDO

### Exposition:

1. Hybrid device detects change in SubnetID from received overhead messages, block 52.
2. Select EVDO system for subsequent data access, block 60. Move the active PPP session from 1X to EVDO.
3. PPP active in EVDO, block 20.

Use Case 7: 1X PPP Established, Idle 1X Connection, Pending Data, Detect New SubnetID

### Preconditions:

- PPP session active in 1X
- 1X connection is dormant

### Postconditions:

- Attempt PPP retry in EVDO

### Exposition:

1. Hybrid device detects change in SubnetID from received overhead messages, block 52.
2. Establish 1X connection to service pending data, block 54.
3. When connection transitions back to dormant, block 50, check if hybrid device is still in new subnet, block 52.
4. Select EVDO system for subsequent data access, block 60. Move the active PPP session from 1X to EVDO.
5. PPP active in EVDO, block 20.

While particular embodiments of the patent disclosure have been shown and described, changes and modifications may be made to such embodiments without departing from the true scope of the patent disclosure.

## Claims

1. A method of data access for a mobile terminal capable of establishing data access via a first and a second wireless network within the same coverage area, the method comprising the steps of:
establishing access via the second wireless network within the coverage area (30);
monitoring for network identifier changes in the first and/or second wireless networks (32, 50);
determining the availability of the first wireless network in response to determining that a network identifier change has occurred in the first network (42, 60);
attempting access via the first wireless network in response to determining that the first wireless network is available (14).

2. The method as claimed in claim 1, further comprising the steps of:
first selecting the first wireless network if available in the coverage area (14); and
on failure to establish access via the first wireless network (16), attempting access via the second wireless network within the coverage area (26).

3. The method as claimed in claim 1 or 2, further comprising first determining whether the first and second wireless networks are available within the coverage area (12).

4. The method as claimed in any one preceding claim, wherein the step of monitoring for network identifier changes comprises detecting at least one of a subnet identification change (52), a system identification change (34), a network identification change and a packet zone identification change (36).

5. The method as claimed in any one of claims 1 to 4, wherein the first network is an EVDO network and the network identifier change in the first network is a subnet identification change.

6. The method as claimed in any one of claims 1 to 5, wherein the second network is a 1XRTT network and the network identifier change in the second network is a system identification change, a network identification change and/or a packet zone identification change.

7. The method as claimed in any one preceding claim, wherein the step of attempting access via the first available wireless network (14) in response to determining that the first wireless network is available comprises the step of preparing the mobile device to communicate with a new subnet (42).

8. The method as claimed in any one of claims 1 to 7 wherein the step of determining whether the first and second wireless networks are available within the coverage area comprises the step of monitoring both first and second wireless networks before, during and after attempting access.

9. Apparatus for data access for a mobile terminal capable of establishing data access via a first and a second wireless network within the same coverage area, the apparatus comprising:
means for establishing access via the second wireless network within the coverage area (30);
means for monitoring for network identifier changes in the first and/or second wireless networks (32, 50);
means for determining availability of the first wireless network in response to determining that a network identifier change has occurred in the first network (42, 60); and
means for attempting access via the first wireless network in response to determining that the first wireless network is available (14).

10. Apparatus as claimed in claim 9, further comprising:
means for selecting a first wireless network if available in the coverage area (14); and
means for attempting access via the second wireless network (16) on failure to establish access via the first wireless network within the coverage area (14).

11. Apparatus as claimed in claim 10, further comprising means for determining whether the first and second wireless networks are available within the coverage area (12).

12. Apparatus as claimed in any one of claims 9 to 11, wherein the means for monitoring network identifier changes comprises at least one of means for detecting a subnet identification change (52), means for detecting a system identification change (34), means for detecting a network identification change and/or means for detecting a packet zone identification change (36).

13. Apparatus as claimed in any one of claims 9 to 12, wherein the first network is an EVDO network and the network identifier change in the first network is a subnet identification change.

14. Apparatus as claimed in any one of claims 9 to 12, wherein the second network is a 1XRTT network and the network identifier change in the second network is a system identification change, a network identification change or a packet zone identification change (36).

15. Apparatus as claimed in any one of claims 9 to 14, wherein the means for attempting access via the first wireless network comprises means for preparing the mobile device to communicate with a new subnet (42).

16. Apparatus as claimed in any one of claims 9 to 15 wherein the means for monitoring is arranged to monitor both first and second wireless networks before, during and after attempting access.

## Patentansprüche

1. Daten-Zugriffsverfahren für eine Mobilstation, die den Datenzugriff über ein erstes und ein zweites Drahtlosnetz innerhalb desselben Versorgungsbereichs herstellen kann, wobei das Verfahren folgende Schritte umfasst:
Herstellen des Zugriffs über das zweite Drahtlosnetz im Versorgungsbereich (30);
Überwachen auf Änderungen der Netzkennung in dem ersten und/oder dem zweiten Drahtlosnetz (32, 50);
Feststellen der Verfügbarkeit des ersten Drahtlosnetzes als Reaktion auf die Feststellung, dass in dem ersten Drahtlosnetz eine Änderung der Netzkennung erfolgt ist (42, 60);
Versuchen, über das erste Drahtlosnetz zuzugreifen als Reaktion auf die Feststellung, dass das erste Drahtlosnetz verfügbar ist (14).

2. Verfahren nach Anspruch 1, ferner folgende Schritte umfassend:
zunächst Auswählen des ersten Drahtlosnetzes, sofern es im Versorgungsbereich verfügbar ist (14); und
falls das Herstellen des Zugriffs über das erste Drahtlosnetz fehlschlägt (16), versuchen, über das zweite Drahtlosnetz im Versorgungsbereich zuzugreifen (26).

3. Verfahren nach Anspruch 1 oder 2, ferner umfassend, zunächst festzustellen, ob das erste und das zweite Drahtlosnetz im Versorgungsbereich verfügbar sind (12).

4. Verfahren nach einem der vorstehenden Ansprüche, wobei der Schritt des Überwachens auf Änderungen der Netzkennung umfasst, mindestens eine Änderung der Teilnetzkennung (52), eine Änderung der Systemkennung (34), eine Änderung der Netzkennung und/oder eine Änderung der Paketzonenkennung (36) zu erkennen.

5. Verfahren nach einem der Ansprüche 1 bis 4, wobei das erste Netz ein EVDO-Netz ist und die Änderung der Netzkennung in dem ersten Netz eine Änderung der Teilnetzkennung ist.

6. Verfahren nach einem der Ansprüche 1 bis 5, wobei das zweite Netz ein 1XRTT-Netz ist und die Änderung der Netzkennung in dem zweiten Netz eine Änderung der Systemkennung, eine Änderung der Netzkennung und/oder eine Änderung der Paketzonenkennung ist.

7. Verfahren nach einem der vorstehenden Ansprüche, wobei der Schritt, den Zugriff über das erste verfügbare Drahtlosnetz zu versuchen (14) als Reaktion auf die Feststellung, dass das erste Drahtlosnetz verfügbar ist, den Schritt umfasst, die Mobilstation dafür vorzubereiten, mit einem neuen Teilnetz zu kommunizieren (42).

8. Verfahren nach einem der Ansprüche 1 bis 7, wobei der Schritt des Feststellens, ob das erste und das zweite Drahtlosnetz in dem Versorgungsbereich verfügbar ist, den Schritt umfasst, sowohl das erste als auch das zweite Drahtlosnetz vor, während und nach dem Zugriffsversuch zu überwachen.

9. Daten-Zugriffsvorrichtung für eine Mobilstation, die den Datenzugriff über ein erstes und ein zweites Drahtlosnetz innerhalb desselben Versorgungsbereichs herstellen kann, wobei die Vorrichtung umfasst:
Mittel zum Herstellen des Zugriffs über das zweite Drahtlosnetz im Versorgungsbereich (30);
Mittel zum Überwachen auf Änderungen der Netzkennung in dem ersten und/oder dem zweiten Drahtlosnetz (32, 50);
Mittel zum Feststellen der Verfügbarkeit des ersten Drahtlosnetzes als Reaktion auf die Feststellung, dass in dem ersten Drahtlosnetz eine Änderung der Netzkennung erfolgt ist (42, 60); und
Mittel zum Versuchen, über das erste Drahtlosnetz zuzugreifen als Reaktion auf die Feststellung, dass das erste Drahtlosnetz verfügbar ist (14).

10. Vorrichtung nach Anspruch 9, ferner umfassend:
Mittel zum Auswählen eines ersten Drahtlosnetzes, sofern es im Versorgungsbereich verfügbar ist (14); und
Mittel zum Versuchen, über das zweite Drahtlosnetz zuzugreifen (16), wenn das Herstellen des Zugriffs über das erste Drahtlosnetz im Versorgungsbereich fehlschlägt (14).

11. Vorrichtung nach Anspruch 10, ferner Mittel umfassend, um festzustellen, ob das erste und das zweite Drahtlosnetz im Versorgungsbereich verfügbar sind (12).

12. Vorrichtung nach einem der Ansprüche 9 bis 11, wobei das Mittel zum Überwachen auf Änderungen der Netzkennung mindestens ein Mittel zum Erkennen einer Änderung der Teilnetzkennung (52), Mittel zum Erkennen einer Änderung der Systemkennung (34), Mittel zum Erkennen einer Änderung der Netzkennung und/oder Mittel zum Erkennen einer Änderung der Paketzonenkennung (36) umfasst.

13. Vorrichtung nach einem der Ansprüche 9 bis 12, wobei das erste Netz ein EVDO-Netz ist und die Änderung der Netzkennung in dem ersten Netz eine Änderung der Teilnetzkennung ist.

14. Vorrichtung nach einem der Ansprüche 9 bis 12, wobei das zweite Netz ein 1XRTT-Netz ist und die Änderung der Netzkennung in dem zweiten Netz eine Änderung der Systemkennung, eine Änderung der Netzkennung und/oder eine Änderung der Paketzonenkennung (36) ist.

15. Vorrichtung nach einem der Ansprüche 9 bis 14, wobei das Mittel zum Versuchen, über das erste Drahtlosnetz zuzugreifen, ein Mittel umfasst, um die Mobilstation dafür vorzubereiten, mit einem neuen Teilnetz zu kommunizieren (42).

16. Vorrichtung nach einem der Ansprüche 9 bis 15, wobei das Mittel zum Überwachen dafür ausgelegt ist, sowohl das erste als auch das zweite Drahtlosnetz vor, während und nach dem Zugriffsversuch zu überwachen.

## Revendications

1. Un procédé d'accès aux données pour un terminal mobile capable d'établir un accès aux données par l'intermédiaire d'un premier et d'un deuxième réseaux sans fil à l'intérieur de la même zone de couverture, le procédé comportant les étapes consistant à :
établir un accès par l'intermédiaire du deuxième réseau sans fil à l'intérieur de la zone de couverture (30) ;
surveiller les changements d'identificateur de réseau dans le premier et/ou le deuxième réseaux sans fil (32, 50) ;
déterminer la disponibilité du premier réseau sans fil en réponse à une détermination qu'un changement d'identificateur de réseau s'est produit dans le premier réseau (42, 60) ;
tenter un accès par l'intermédiaire du premier réseau sans fil en réponse à une détermination que le premier réseau sans fil est disponible (14).

2. Le procédé tel que revendiqué dans la revendication 1, comportant de plus les étapes consistant à :
d'abord sélectionner le premier réseau sans fil s'il est disponible dans la zone de couverture (14) ; et
en cas d'échec dans l'établissement d'un accès par l'intermédiaire du premier réseau sans fil (16), tenter un accès par l'intermédiaire du deuxième réseau sans fil à l'intérieur de la zone de couverture (26).

3. Le procédé tel que revendiqué dans la revendication 1 ou 2, comportant de plus l'étape consistant à d'abord déterminer si les premier et deuxième réseaux sans fil sont disponibles à l'intérieur de la zone de couverture (12).

4. Le procédé tel que revendiqué dans n'importe quelle revendication précédente, dans lequel l'étape de surveillance des changements d'identificateur de réseau comporte la détection d'au moins un changement parmi un changement d'identification de sous-réseau (52), un changement d'identification de système (34), un changement d'identification de réseau et un changement d'identification de zone de paquets (36).

5. Le procédé tel que revendiqué dans n'importe laquelle des revendications 1 à 4, dans lequel le premier réseau est un réseau EVDO et le changement d'identificateur de réseau dans le premier réseau est un changement d'identification de sous-réseau.

6. Le procédé tel que revendiqué dans n'importe laquelle des revendications 1 à 5, dans lequel le deuxième réseau est un réseau 1XRTT et le changement d'identificateur de réseau dans le deuxième réseau est un changement d'identification de système, un changement d'identification de réseau et/ou un changement d'identification de zone de paquets.

7. Le procédé tel que revendiqué dans n'importe quelle revendication précédente, dans lequel l'étape consistant à tenter un accès par l'intermédiaire du premier réseau sans fil disponible (14) en réponse à une détermination que le premier réseau sans fil est disponible comporte l'étape de préparer le dispositif mobile à communiquer avec un nouveau sous-réseau (42).

8. Le procédé tel que revendiqué dans n'importe laquelle des revendications 1 à 7 dans lequel l'étape consistant à déterminer si les premier et deuxième réseaux sans fil sont disponibles à l'intérieur de la zone de couverture comporte l'étape de surveillance à la fois des premier et deuxième réseaux sans fil avant, durant et après la tentative d'accès.

9. Un appareil d'accès aux données pour un terminal mobile capable d'établir un accès aux données par l'intermédiaire d'un premier et d'un deuxième réseaux sans fil à l'intérieur de la même zone de couverture, l'appareil comportant :
des moyens pour établir un accès par l'intermédiaire du deuxième réseau sans fil à l'intérieur de la zone de couverture (30) ;
des moyens pour surveiller les changements d'identificateur de réseau dans le premier et/ou le deuxième réseaux sans fil (32, 50) ;
des moyens pour déterminer la disponibilité du premier réseau sans fil en réponse à une détermination qu'un changement d'identificateur de réseau s'est produit dans le premier réseau (42, 60) ; et
des moyens pour tenter un accès par l'intermédiaire du premier réseau sans fil en réponse à une détermination que le premier réseau sans fil est disponible (14).

10. Un appareil tel que revendiqué dans la revendication 9, comportant de plus :
des moyens pour sélectionner un premier réseau sans fil s'il est disponible dans la zone de couverture (14) ; et
des moyens pour tenter un accès par l'intermédiaire du deuxième réseau sans fil (16) en cas d'échec dans l'établissement d'un accès par l'intermédiaire du premier réseau sans fil à l'intérieur de la zone de couverture (14).

11. Un appareil tel que revendiqué dans la revendication 10, comportant de plus des moyens pour déterminer si les premier et deuxième réseaux sans fil sont disponibles à l'intérieur de la zone de couverture (12).

12. Un appareil tel que revendiqué dans n'importe laquelle des revendications 9 à 11, dans lequel les moyens pour surveiller les changements d'identificateur de réseau comportent au moins un élément parmi des moyens pour détecter un changement d'identification de sous-réseau (52), des moyens pour détecter un changement d'identification de système (34), des moyens pour détecter un changement d'identification de réseau et/ou des moyens pour détecter un changement d'identification de zone de paquets (36).

13. Un appareil tel que revendiqué dans n'importe laquelle des revendications 9 à 12, dans lequel le premier réseau est un réseau EVDO et le changement d'identificateur de réseau dans le premier réseau est un changement d'identification de sous-réseau.

14. Un appareil tel que revendiqué dans n'importe laquelle des revendications 9 à 12, dans lequel le deuxième réseau est un réseau 1XRTT et le changement d'identificateur de réseau dans le deuxième réseau est un changement d'identification de système, un changement d'identification de réseau ou un changement d'identification de zone de paquets (36).

15. Un appareil tel que revendiqué dans n'importe laquelle des revendications 9 à 14, dans lequel les moyens pour tenter un accès par l'intermédiaire du premier réseau sans fil comportent des moyens pour préparer le dispositif mobile à communiquer avec un nouveau sous-réseau (42).

16. Un appareil tel que revendiqué dans n'importe laquelle des revendications 9 à 15 dans lequel les moyens pour surveiller sont agencés afin de surveiller à la fois les premier et deuxième réseaux sans fil avant, durant et après la tentative d'accès.
